# EUROPÄISCHE PATENTSCHRIFT

(11) **EP 1 008 732 B1**
(45) Veröffentlichungstag und Bekanntmachung des Hinweises auf die Patenterteilung: **03.03.2004**
(21) Anmeldenummer: 99123870.0
(22) Anmeldetag: 01.12.1999
(51) Int. Cl.: F01N 3/20, B01D 53/94

(54) **Vorrichtung und Verfahren zum Nachbehandeln von Abgasen einer mit Luftüberschuss arbeitenden Brennkraftmaschine**
Apparatus and method for after-treatment of exhaust gases of a lean burn internal combustion engine
Dispositif et procédé de post-traitement des gaz d'échappement d'un moteur à combustion interne à mélange pauvre

(30) Priorität: 07.12.1998 DE 19856366
(43) Veröffentlichungstag der Anmeldung: 14.06.2000
(73) Patentinhaber: SIEMENS AKTIENGESELLSCHAFT, 80333 München (DE)
(72) Erfinder: Tost, Rainer, 90427 Nürnberg (DE)
(74) Vertreter: Tergau & Pohl Patentanwälte

(56) Entgegenhaltungen:
- DE-A- 4 436 397
- DE-C- 19 806 265
- US-A- 5 601 792

## Beschreibung

Die Erfindung betrifft eine Vorrichtung gemäß dem Oberbegriff des unabhängigen Anspruchs 1 und ein Verfahren gemäß dem Oberbegriff des unabhängigen Anspruchs 14 zum Nachbehandeln von Abgasen einer mit Luftüberschuß arbeitenden Brennkraftmaschine.

Diesel-Brennkraftmaschinen und magerbetriebene Otto-Brennkraftmaschinen, bei denen Kraftstoff unmittelbar in den Brennraum im Zylinder eingespritzt wird, neigen wegen des hohen Sauerstoffüberschusses, mit denen sie betrieben werden, zu hohen NOₓ-Emissionen. Zur Verringerung des NOₓ-Gehaltes im Abgas solcher Brennkraftmaschinen ist das sogenannte Selectiv-Catalytic-Reduction (SCR)-Verfahren bekannt. Dabei wird an einer Stelle stromaufwärts eines Reduktionskatalysators mit Hilfe einer elektrisch angesteuerten Dosiereinrichtung ein Reduktionsmittel in den Abgasstrom eingebracht, das die im Abgas enthaltenen Stickoxide in Anwesenheit von Sauerstoff am Reduktionskatalysator zu unschädlichem Stickstoff N₂ und Wasser H₂O umsetzt. Ein solches Verfahren ist beispielsweise in der Veröffentlichung "Ein geregeltes Abgasnachbehandlungssystem zur Erfüllung zukünftiger Emissionsgrenzwerte bei Pkw-Dieselmotoren" von Schöppe et al, 17. Internat. Wiener Motorensymposium, 1996, Bd.1, beschrieben.
Als Reduktionsmittel kann Ammoniak NH₃ dienen, aus Gründen der Handhabbarkeit wird üblicherweise eine wäßrige Harnstofflösung eingesetzt. Es ist aber auch möglich, Kraftstoff oder Derivate als Reduktionsmittel zu verwenden.

Bei solchen Abgasnachbehandlungssystemen wird von einem Steuergerät der Brennkraftmaschine oder von einem gesonderten Steuergerät, vielfach als DeNOₓ-Steuergerät bezeichnet, fortlaufend die Sollmenge des zu dosierenden Reduktionsmittels auf der Grundlage von Betriebsparametern der Brennkraftmaschine, wie beispielsweise die in den Brennraum eingebrachte Kraftstoffmenge, Betriebstemperatur und Drehzahl, sowie der Temperatur des Reduktionskatalysators berechnet.

Als Dosiereinrichtung dient dabei vorzugsweise ein herkömmliches Einspritzventil, wie es beispielsweise bei einer Niederdruck-Benzineinspritzanlage Verwendung findet. Entsprechend dem geänderten Verwendungszweck eines solchen Einspritzventils, nämlich Reduktionsmittel, z.B. Harnstoff einzuspritzen, sind zumindest die unmittelbar dem Harnstoff ausgesetzten Komponenten des Ventils aus harnstoffresistenten Materialien (Edelmetall, beschichteter Kunststoff) gefertigt und die Geometrie der Austrittsöffnung des Ventils ist den gegenüber den bei Kraftstoffzumessung kleineren auszustoßenden Mengen angepaßt.

Der Einsatz von herkömmlichen Niederdruck-Benzineinspritzventilen ist in der Regel nur bis zu einer bestimmten Temperatur, typisch ca. 130°C zulässig. Dies ist begründet in der Spulenkonstruktion, insbesondere der Isolierung der Spulen für den elektromagnetischen Antrieb und der thermischen Festigkeiten der verwendeten Materialien, z.B. der Dichtungen.

Da das Einspritzventil unmittelbar an dem Abgasrohr stromaufwärts des Reduktionskatalysators angeordnet ist, wird diese maximale Temperatur außerhalb der Warmlaufphase der Brennkraftmaschine fast immer erreicht.

Wird das Einspritzventil oder zumindest Teile davon aber für längere Zeit über diese maximal zulässige Temperatur erwärmt, so kommt es zu Funktionsstörungen bis zum vollständigen Ausfall des Einspritzventils.

Eine zu hohe Temperatur am Einspritzventil hat außerdem negative Einflüsse auf das einzubringende Reduktionsmittel. Im Falle der Verwendung von wässriger Harnstofflösung als Reduktionsmittel darf diese nicht über bestimmte Temperaturgrenzen erwärmt werden, da sonst die thermische Zersetzung oder eine Auskristallisierung der Harnstoffwasserlösung beginnt.

Zur Lösung dieses thermischen Problemes ist es möglich, eine relativ lange Leitungsverbindung zwischen Zumeßstelle des Reduktionsmittels und Eintrittsstelle in das Abgas vorzusehen. Es besteht hierbei aber die Gefahr, daß sich bereits fein verteilter Harnstoff wieder rekombiniert zu großen Tropfen und daß eine unregelmäßige Zumeßrate auftritt.

Eine andere Möglichkeit zur Kühlung des Einspritzventils besteht darin, bei einem sogenannten fußgespeisten Einspritzventil einen Teil des Ventilkörpers ständig von Harnstoffwasserlösung zu umspülen und die Wärme dadurch abzutransportieren. Dies setzt einen kontinuierlichen Harnstoffkreislauf vom Harnstofftank zum Einspritzventil und zurück voraus, was einen nicht unbeträchtlichen konstruktiven Aufwand beinhaltet.

In der DE 44 36 397 A1 ist zum Einbringen eines Reduktionsmittels in das dem Reduktionskatalysator zugeführten Abgas ein elektrisch gesteuertes Dosierventil vorgesehen, das in einem gemeinsamen Gehäuse mit einem Steuerventil kombiniert ist. Das Steuerventil dient der gesteuerten Einbringung von zugeführter Druckluft, in der eine über das Dosierventil vorgelagerte Menge von Reduktionsmittel aufbereitet, intermittierend in das Abgas eingegeben wird. Das Steuerventil und das Dosierventil sind in einem gemeinsamen Trägerkörper angeordnet, der von Kühlwasser aus dem Kühlwasserkreislauf der Brennkraftmaschine umströmt wird. Durch eine solche Ausgestaltung kann zwar die Maximaltemperatur an der Stirnseite der Einspritzventilaufnahme auf die Kühlwassertemperatur begrenzt (max. 90°-100°C) und die Temperaturbeanspruchung des Harnstoffkreislaufes entlastet werden, es sind aber zusätzlich ein Kühlmantel, Leitungen und Schlauchverbindungen nötig.

In der US 5,601,792 sind ein Verfahren und eine Vorrichtung zum Reinigen von Abgasen aus Verbrennungsanlagen beschrieben. Dabei wird eine in einem Reaktionsmitteltank aufbereitete wässerige Harnstofflösung in den heißen Abgasstrom verschiedener Konzentration eingeführt und in Richtung des Abgasstroms fein versprüht. Nach dem Zersetzen des Harnstoffs in einen Pyrolysationskanal wird der Abgasstrom in-line durch in einem Mischkanal angeordnete Mischer homogen gemischt. In einem in-line anschließenden Reaktionskanal werden die reduzierbaren Abgaskomponenten mit der wässerigen Harnstofflösung in wenigstens einem selektiven, nicht zeolithhaltigen Reduktionskatalysator dann je nach Anlage auch die oxidierbaren Abgaskomponenten ohne Reaktionsmittel in wenigstens einem Oxidationskatalysator zur weitgehend vollständigen Reaktion zu unschädlichen Gasen gebracht. Ein in den Pyrolysationskanal mündender Zweistoffdüsenapparat umfaßt ein Umschaltventil für eine Arbeits- und eine Ausblasstellung, ein im Bereich des Abgasstromes angeordnetes Mantelrohr für eine Druckluftzuführung, einen in Abstand im Mantelrohr geführten Harnstoffleiter und eine Düse zum feinteiligen Versprühen der wässerigen Harnstofflösung. Die Druckluft dient dabei nicht nur als Fördermittel sondern auch als Kühlmittel. Die Druckluft wird derart entlang des Harnstoffleiters geführt, daß die Temperatur der Harnstofflösung im Harnstoffleiter und bis zur Austrittsöffnung der Düse vorzugsweise bei höchstens 100° C gehalten wird.

Der Erfindung liegt die Aufgabe zugrunde, eine Vorrichtung und ein Verfahren zum Nachbehandeln von Abgasen einer mit Luftüberschuß betriebenen Brennkraftmaschine der eingangs genannten Art anzugeben, bei der bzw. mit dem das Reduktionsmittel durch ein Niederdruck -Benzineinspritzventil erfolgen kann und die thermische Belastung des Einspritzventils möglichst gering ist.

Diese Aufgabe wird durch die Merkmale des Patentanspruches 1 für die Vorrichtung und durch die Merkmale des Patentanspruches 14 für das Verfahren gelöst.

Durch Umfassen des in der Dosiereinrichtung enthaltenen Einspritzventils mittels eines unmittelbar mit der Abgasleitung verbundenen, doppelwandigen Ventilaufnahmekörpers wird es ermöglicht, Druckluft in einen Luftspalt zwischen einer Außenwandung und einer Innenwandung des Ventilaufnahmekörpers einzublasen und dadurch zumindest die abgasnahen Teile des Einspritzventils zu kühlen.

Zur Erzeugung der Druckluft wird in vorteilhafter Weise eine elektrisch ansteuerbare Pumpe verwendet, da hierbei auch nach Abstellen der Brennkraftmaschine sichergestellt werden kann, daß Druckluft für eine bestimmte Zeit noch weiter gefördert und damit verhindert wird, daß die Restwärme der Abgasanlage das Einspritzventil aufheizt.

In vorteilhafter Ausgestaltung der Erfindung wird das Aufrechterhalten der Kühlfunktion nach Abstellen der Brennkraftmaschine durch einen Druckspeicher erreicht, der in einer die Drucklufterzeugungseinrichtung mit dem Ventilaufnahmekörper verbindenden Druckluftleitung eingeschaltet ist.

Eine besonders vorteilhafte Möglichkeit der Bereitstellung der Druckluft ergibt sich, wenn die Abgasnachbehandlungsanlage in einem Nutzfahrzeug eingesetzt wird, das einen zur Steuerung von Funktionen, wie beispielsweise der Bremsanlage, einen vorhandenen Druckluftkreis aufweist. Durch einen Abgriff wird die zur Kühlung benötigte Druckluft dem Einspritzventil zugeführt. Dadurch entfallen jegliche zusätzliche Komponenten zur Druckerzeugung.

Die Abgasnachbehandlungsanlage läßt sich auch in einfache Weise und ohne großen Aufwand bei einer aufgeladenen Brennkraftmaschine einsetzen. Die Druckluft zum Kühlen des Einspritzventils wird dabei über einen gedrosselten Abzweig stromabwärts des Ladeluftkühlers entnommen.

Durch die doppelwandige Aufnahme für das Einspritzventil und Einbringen von Druckluft in den Luftspalt zwischen den beiden Wandungen der Aufnahme ergibt sich insgesamt eine sehr einfach aufgebaute und kostengünstige Möglichkeit der Kühlung des Einspritzventils. Das Reduktionsmittel wird nicht mehr über die kritische Temperatur erhöht und es findet somit keine thermische Zersetzung des Reduktionsmittels statt.

Es ist nur eine Stichleitung von der Reduktionsmittelpumpe zum Einspritzventil nötig und eine Rücklaufleitung zum Reduktionsmittelbehälter kann entfallen.

Weitere Vorteile und Weiterbildungen der Erfindung sind in den Unteransprüchen gekennzeichnet

Die Erfindung wird nachfolgend unter Bezugnahme auf die Zeichnung näher erläutert. Es zeigen:
- Figur 1: eine schematische Darstellung eines ersten Ausführungsbeispieles der erfindungsgemäßen Vorrichtung und
- Figur 2: eine schematische Darstellung eines zweiten Ausführungsbeispieles der erfindungsgemäßen Vorrichtung ohne des Reduktionsmittel- und Druckluftkreises.

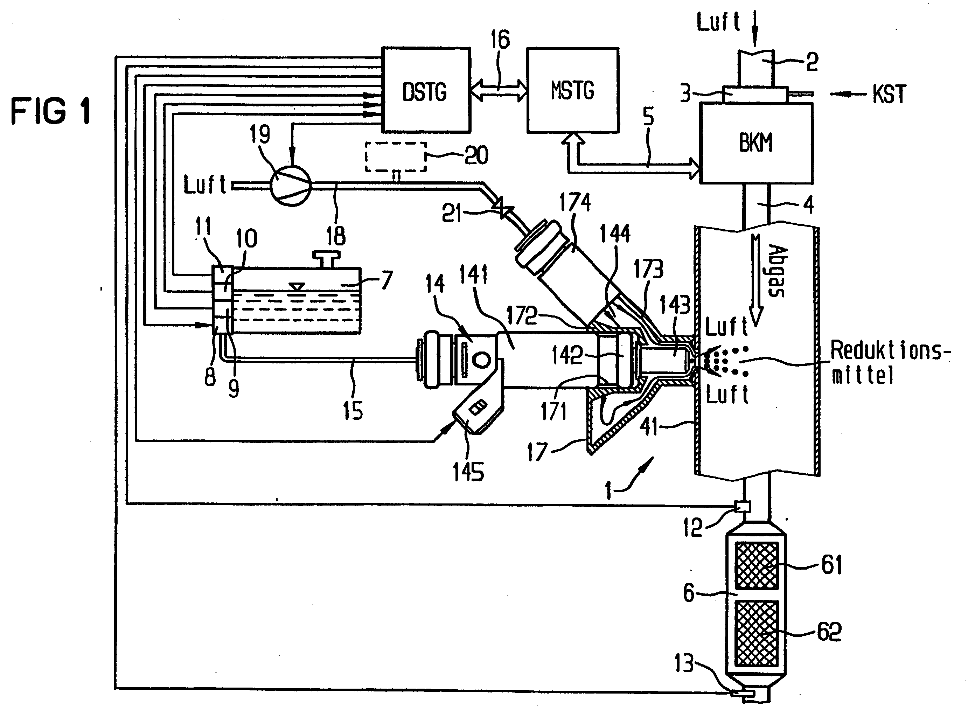

In Figur 1 ist Form eines Blockschaltbildes sehr vereinfacht eine mit Luftüberschuß betriebene Brennkraftmaschine BKM mit einer ihr zugeordneten Abgasnachbehandlungsanlage 1 gezeigt. Dabei sind nur diejenigen Teile dargestellt, die für das Verständnis der Erfindung notwendig sind. Insbesondere wird auf die Darstellung des Kraftstoffkreislaufes verzichtet. In diesem Ausführungsbeispiel ist als Brennkraftmaschine eine Dieselbrennkraftmaschine gezeigt und als Reduktionsmittel zum Nachbehandeln des Abgases wird wässrige Harnstofflösung verwendet.

Der Brennkraftmaschine BKM wird über eine Ansaugleitung 2 die zur Verbrennung notwendige Luft zugeführt. Eine Einspritzanlage, die beispielsweise als Hochdruckspeichereinspritzanlage (Common rail) mit Einspritzventilen ausgebildet sein kann, die Kraftstoff KST direkt in die Zylinder der Brennkraftmaschine BKM einspritzen, ist mit dem Bezugszeichen 3 bezeichnet. Das Abgas der Brennkraftmaschine BKM gelangt über eine Abgasleitung 4 zu der Abgasnachbehandlungsanlage 1.

Zur Steuerung und Regelung der Brennkraftmaschine BKM ist ein an sich bekanntes Motorsteuergerät MSTG über eine hier nur schematisch dargestellte Daten - und Steuerleitung 5 mit der Brennkraftmaschine BKM verbunden. Über diese Daten - und Steuerleitung 5 werden Signale von Sensoren (z.B. Temperatursensoren für Ansaugluft, Ladeluft, Kühlmittel, Lastsensor, Geschwindigkeitssensor) und Signale für Aktoren (z.B. Einspritzventil, Stellglieder) zwischen der Brennkraftmaschine BKM und dem Motorsteuergerät MSTG übertragen.

Die Abgasnachbehandlungsanlage 1 weist einen Reduktionskatalysator 6 auf, der mehrere in Reihe geschaltete Katalysatoreinheiten 61,62 beinhaltet. Stromabwärts und/oder stromaufwärts des Reduktionskatalysators 6 kann zusätzlich je ein Oxidationskatalysator angeordnet sein. Ferner ist ein Dosiersteuergerät DSTG vorgesehen, das einem Harnstoffvorratsbehälter 7 mit einer elektrisch ansteuerbaren Förderpumpe 8 für den Harnstoff zugeordnet ist. Der Harnstoffvorratsbehälter 7 weist eine elektrische Heizeinrichtung 9 und Sensoren 10,11 auf, welche die Temperatur des Harnstoffes bzw. den Füllstand im Harnstoffvorratsbehälter 7 erfassen. An das Dosiersteuergerät DSTG werden außerdem noch die Signale eines stromaufwärts des Reduktionskatalysators 6 angeordneten Temperatursensors 12 und eines stromabwärts des Reduktionskatalysators 6 angeordneten NOₓ-Meßaufnehmers 13 übergeben.

Das Dosiersteuergerät DSTG steuert ein elektromagnetisches Einspritzventil 14 an, dem über eine Leitung 15 Harnstoff mit Hilfe der Förderpumpe 8 aus dem Harnstoffvorratsbehälter 7 zugeführt wird. Die Einspritzung des Harnstoffes mittels des Einspritzventiles 14 erfolgt in die Abgasleitung 4 stromaufwärts des Reduktionskatalysators 6.

Im Betrieb der Brennkraftmaschine BKM strömt das Abgas in der eingezeichneten Pfeilrichtung durch die Abgasleitung 4.

Das Dosiersteuergerät DSTG ist zum gegenseitigen Datentransfer über ein Bussystem 16 mit dem Motorsteuergerät MSTG verbunden. Über das Bussystem 16 werden die zur Berechnung der zu dosierenden Harnstoffmenge relevanten Betriebsparameter, wie z.B. Drehzahl, Luftmasse, Kraftstoffmasse, Regelweg einer Einspritzpumpe, Abgasmassenstrom, Betriebstemperatur, Ladelufttemperatur, Spritzbeginn usw. dem Dosiersteuergerät DSTG übergeben.

Ausgehend von diesen Parametern und den Meßwerten für die Abgastemperatur und dem NOₓ-Gehalt berechnet das Dosiersteuergerät DSTG die einzuspritzende Menge an Harnstoff. Bei Einspritzung in die Abgasleitung 4 wird der Harnstoff hydrolysiert und durchmischt. In den Katalysatoreinheiten 61 und 62 erfolgt die katalytische Reduktion des NOₓ im Abgas zu N₂ und H₂O.

Als Einspritzventil 14 zum Einbringen des Harnstoffes in die Abgasleitung 4 dient ein übliches Niederdruck-Benzineinspritzventil, das in einen mit einer Wandung 41 der Abgasleitung 4 verbundenen Ventilaufnahmekörper 17 (in der Figur teilweise in Schnittdarstellung gezeigt) eingesteckt und anschließend mechanisch verrastet wird, so daß das Einspritzventil 14 in radialer und axialer Richtung zentriert ist. Der Ventilaufnahmekörper 17 weist hierzu an seiner der Abgasleitung 4 abgewandten Seite eine dem Durchmesser des Einspritzventilkörpers 141 angepaßte Ausnehmung 171 auf, die von einer Innenwandung 172 begrenzt wird, so daß in eingestecktem Zustand die Längsachse des Einspritzventils 14 in etwa rechtwinklig zu der Wandung 41 der Abgasleitung 4 liegt und die Austrittsöffnung des Einspritzventils 14 kurz vor oder in Höhe der mit einer Durchtrittsöffnung versehenen Wandung 41 der Abgasleitung 4 liegt. Die Abdichtung des Einspritzventiles 14 in der Ausnehmumg 171 des Ventilaufnahmekörpers 17 erfolgt mittels eines, an dem zur Wandung 41 hinzeigenden Ende des Einspritzventilkörpers 141 angeordneten O-Ring-Dichtung 142.

Der Ventilaufnahmekörper 17 ist doppelwandig ausgeführt, wobei eine Wandung die den Einspritzventilkörper 141 umfassende Innenwandung 172 bildet die weitere Wandung durch eine Außenwandung 173 des Ventilaufnahmekörpers 17 gebildet wird, wobei sich die äußere Kontur des Ventilaufnahmekörpers 17 in Richtung der Abgasleitung 4 trichterförmig verjüngt, so daß sowohl der in der Ausnehmung 171 fixierte Teil des Einspritzventilkörpers 141 als auch die gegenüber dem Einspritzventilkörper 141 einen geringeren Durchmesser aufweisende Ventilspitze 143 unter Bildung eines Luftspaltes 144 umfasst ist.

Der Ventilaufnahmekörper 17 ist über die Außenwandung 173 fest mit der Wandung 41 der Abgasleitung 4 verbunden, im Falle eines metallischen Ventilaufnahmekörpers 17 z.B. verschweißt. Alternativ hierzu kann der Ventilaufnahmekörper 17 aus temperaturfestem Kunststoff oder aus einer Keramik bestehen. Das verwendete Material soll einerseits ein schlechter Wärmeleiter sein, damit möglichst wenig Wärme vom Abgas und der Abgasleitung auf das Einspritzventil übergeht und andererseits eine genügend hohe mechanische Festigkeit aufweisen, um das Einspritzventil aufzunehmen und auch im Betrieb der Brennkraftmaschine sicher zu halten.

Das Einspritzventil 14 weist einen elektrischen Anschluß 145 auf, über den es mittels nicht näher bezeichneten Leitungen mit dem Dosiersteuergerät DSTG verbunden ist.

Ferner ist an dem Ventilaufnahmekörper 17 ein Anschlußstück 174 zum Anschließen einer Druckluftleitung 18 vorgesehen, über die Kühlluft zum Kühlen des Einspritzventils 14 zugeführt wird. Der Anschluß der Druckluftleitung 18 kann dabei in vorteilerhafter Weise mittels einer herkömmlichen Schnellkupplung erfolgen.

Als Drucklufterzeuger dient beispielsweise eine über Signale des Dosiersteuergeräts DSTG elektrisch angetriebene Pumpe 19, vorzugsweise eine Sekundärluftpumpe wie sie zur Abgasnachbehandlung bei Ottomotoren bekannt sind oder eine mechanisch über die Kurbelwelle der Brennkraftmaschine angetriebene Pumpe.

Alternativ hierzu kann die Druckluft zum Kühlen des Einspritzventils 14 bei aufgeladenen Brennkraftmaschinen über einen gedrosselten Abzweig stromabwärts des Ladeluftkühlers entnommen und dem Einspritzventil 14 zugeführt werden. Dies hat den Vorteil, daß die Temperatur der Kühlluft relativ niedrig und dadurch der Kühleffekt für das Einspritzventil groß ist.

Bei Nutzfahrzeugen, die ein Druckluftleitungsnetz aufweisen, an das die Druckluftbremsanlage, sowie weitere Zusatzgeräte angeschlossen sind, kann die Kühlluft von diesem oder von einem Nebendruckluftkreis entnommem werden.

Der Fluß der Kühlluft im Luftspalt 144 innerhalb des Ventilaufnahmekörpers 17 ist mit Pfeilsymbolen gekennzeichnet.

Das Einspritzventil 14 wird während des Betriebes der Brennkraftmaschine intermittierend abhängig von den aktuellen Betriebsparametern der Brennkraftmaschine BKM und des Reduktionskatalysators 6 angesteuert. Der Drucklufterzeuger, beispielsweise die elektrische Pumpe 19 wird ebenfalls angesteuert, so daß Kühlluft über die Druckluftleitung 18 und das Anschlußstück 174 in den Luftspalt 144 zwischen der Innenwandung 172 und der Außenwandung 173 des Ventilaufnahmekörpers 17 strömt. Dadurch wird der abgasnahe Teil des Einspritzventils 14, insbesondere die Ventilspitze 143 mit Kühlluft umspült. Diese Kühlluft wird auch aufgrund der konstruktiven Ausgestaltung des Ventilaufnahmekörpers 17 über die dem Abgas zugewandte Stirnseite (Strahlaustritts-seite) des Einspritzventils 14 geleitet, wodurch die Wärmeaufnahme des Einspritzventils 14 aus dem Abgas stark verringert wird. Die Kühlluft strömt anschließend in die Abgasleitung 4 und vermischt sich dort mit dem Abgas der Brennkraftmaschine. Da der Anteil der für die Kühlung des Einspritzventils 14 eingebrachten Zusatzluft in die Abgasleitung 4 bezogen auf den gesamten Abgasmassenstrom in der Abgasleitung 4 sehr gering ist (typisch ca. <1%) und die unverbrannten Bestandteile im Abgas eines Dieselmotors oder eines Mager-Ottomotors ebenfalls sehr gering sind, hat dies keinen nennenswerten Einfluß auf die Umsetzung der Schadstoffe im Reduktionskatalysator 6.

Durch eine entsprechende konstruktive Ausgestaltung des Übergangs Einspritzventilstirnseite - Luftführung kann der Kühlluftstrom noch zusätzlich zur Formung des Einspritzstrahls verwendet werden, wodurch eine bessere Aufbereitung des Reduktionsmittels wässrige Harnstofflösung ermöglicht wird.

Wird als Drucklufterzeuger eine elektrisch ansteuerbare Pumpe 19 verwendet, so eröffnet dies die Möglichkeit, auch nach Abstellen der Brennkraftmaschine für eine gewisse Zeitspanne die Kühlung des Einspritzventils 14 noch aufrechtzuerhalten. Dies kann entweder rein zeitgesteuert oder temperaturgesteuert erfolgen. Durch einen solchen Nachlauf der Pumpe 19 nach Abstellen der Brennkraftmaschine BKM wird an der Einspritzventilspitze 143 und der dem Abgas zugewandten Stirnseite (Strahlaustrittsseite) des Einspritzventils 14 ein Luftpolster geschaffen, das verhindert, daß die Abwärme (Restwärme) der Abgasnachbehandlungsanlage das Einspritzventil 14 und das Reduktionsmittel aufheizen.

Anstelle des Nachlaufens einer elektrisch angetriebenen Pumpe für die Kühlluft kann in der Druckluftleitung 18 ein Druckspeicher 20 (in der Figur 1 mit strichlierten Linien eingezeichnet) vorgesehen werden, der während des Betriebes der Pumpe gefüllt wird und der nach Abschalten der Brennkraftmaschine und des Druckerzeugers noch für eine gewisse Zeitspanne, die in erster Linie von dem Volumen des Druckspeichers abhängig ist, Kühlluft zur Verfügung stellt. Ein solcher Druckspeicher 20 kann auch bei aufgeladenen Brennkraftmaschinen eingesetzt werden.

Um ein Rückströmen von Abgasen aufgrund des in der Abgasleitung 4 herrschenden Abgasgegendruckes in die Druckluftleitung 18 zu verhindern, kann in der Druckluftleitung 18 ein Rückchlagventil 21 vorgesehen werden. Alternativ hierzu ist es auch möglich, ein von dem Dosiersteuergerät DSTG ansteuerbares elektrisches Ventil für diesen Zweck einzusetzen.

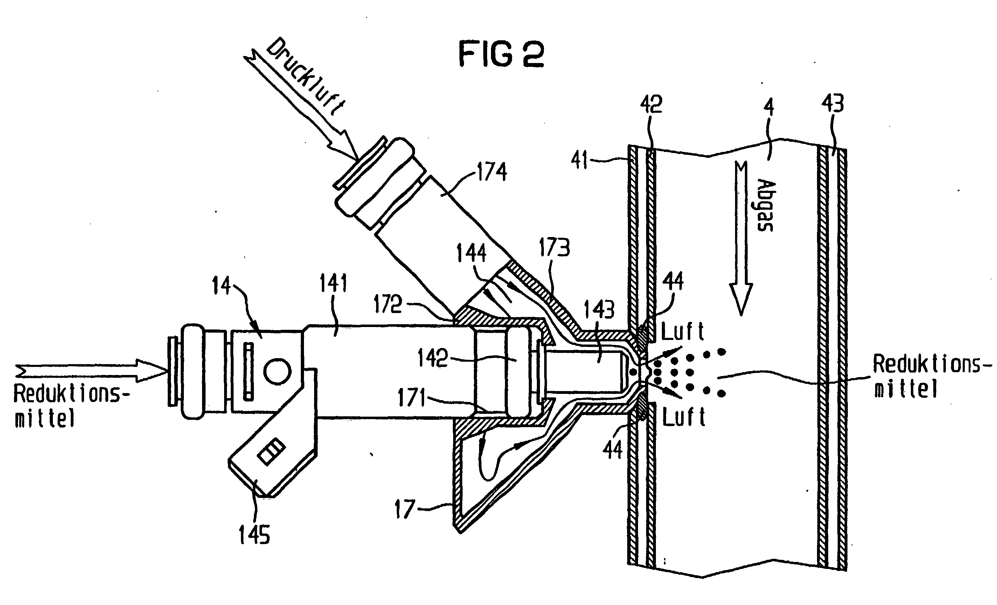

In Figur 2 ist ein Ausführungsbeispiel gezeigt, bei dem der Ventilaufnahmekörper 17 an einer doppelwandig ausgeführter Abgasleitung 4 angeordnet ist. Der Aufbau und die Funktion des Reduktionsmittelkreises und des Druckluftkreises sind identisch den Darstellungen der Figur 1 und sind deshalb hier nicht gezeigt. Doppelwandige Abgasleitungen werden eingesetzt, um die Wärmeverluste zu verringern und so eine passive Erwärmung des Katalysators zu unterstützen. Der zwischen den einzelnen Wandungen 41,42 der Abgasleitung 4 vorhandene Raum 43, der als Luftspaltisolierung dient, wird mittels eines geeigneten Abdicht-und Isolierelementes 44 (z.B. aus Keramik) an der Mündungsstelle des Einspritzventiles 14 in die Abgasleitung 4 abgeschlossen. Dadurch kann kein Reduktionsmittel in den Raum 43 zwischen den beiden Wandungen 41,42 gelangen.

Die Erfindung wurde anhand zweier Ausführungsbeispiele gezeigt, bei denen in eingebautem Zustand des Einspritzventils in dem Ventilaufnahmekörper die Längsachse des Einspritzventils in etwa rechtwinklig zu einer Wandung der Abgasleitung liegt. Es ist aber auch möglich, den Ventilaufnahmekörper konstruktiv so abzuwandeln, daß in eingebautem Zustand des Einspritzventils (14) dessen Längsachse bezogen auf die Strömungsrichtung des Abgases mit der Wandung (41) der Abgasleitung einem spitzen Winkel bildet.

## Patentansprüche

1. Vorrichtung zum Nachbehandeln von Abgasen einer mit Luftüberschuß arbeitenden Brennkraftmaschine (BKM) mit einer Abgasnachbehandlungsanlage (1), mit
- einem zur Reduktion von NOₓ-Bestandteilen im Abgas dienenden Reduktionskatalysator (6),
- einer elektrisch ansteuerbaren Dosiereinrichtung zum gesteuerten Einbringen von Reduktionsmittel in eine Abgasleitung (4) stromaufwärts des Reduktionskatalysators (6),
- einer Einrichtung zum Kühlen der Dosiereinrichtung; wobei diese ein Einspritzventil (14) mit einem Einspritzventilkörper (141) und einer Austrittsöffnung an einer Ventilspitze (143) aufweist, das von einem mit der Abgasleitung (4) verbundenen Ventilaufnahmekörper (17) umfaßt ist,
- einer Drucklufterzeugungseinrichtung (19), die Druckluft in einen Luftspalt (144) zwischen dem Einspritzventil (14) und dem Ventilaufnahmekörper (17) zum Kühlen zumindest der abgasnahen Teile (143) des Einspritzventils (14) einbläst,
**dadurch gekennzeichnet, daß**
- der Ventilaufnahmekörper (17) doppelwandig mit einer Außenwandung (173) und einer Innenwandung (172) ausgebildet ist, wobei die Innenwandung (172) an der der Abgasleitung (4) abgewandten Seite des Ventilaufnahmekörpers (17) eine dem Durchmesser des Einspritzventils (14) angepaßte, das Einspritzventils (14) haltende Ausnehmung (171), sowie, zusammen mit der Außenwandung (173), einen entlang dem Einspritzventilkörper (141) das Einspritzventil (14) umschließenden, jedoch nicht direkt von diesem begrenzten ersten Teil des Luftspaltes (144) bildet, wobei ein zweiter Teil des Luftspaltes (144) unmittelbar zwischen der Ventilspitze (143) und der Außenwandung (173) des Ventilaufnahmekörpers (17) gebildet ist, und
- der Ventilaufnahmekörper (17) unmittelbar mit der Abgasleitung (4) verbunden ist, wobei die Austrittsöffnung des Einspritzventils (14) kurz vor oder in Höhe der mit einer Durchtrittsöffnung für das einzubringende Reduktionsmittel versehenen Wandung (41) der Abgasleitung (4) liegt.

2. Vorrichtung nach Anspruch 1, **dadurch gekennzeichnet, daß** sich die äußere Kontur des Ventilaufnahmekörpers (17) in Richtung der Abgasleitung (4) trichterförmig verjüngt, wobei der im Bereich der Ausnehmung (171) zwischen der Innenwandung (172) und der Außenwandung (173) gebildete Teil des Luftspalts (144) an einen zwischen der Ventilspitze (143) des Einspritzventils (14) und der Außenwandung (173) gebildeten Teil des Luftspalts (144) grenzt.

3. Vorrichtung nach Anspruch 2, **dadurch gekennzeichnet, daß** ein in der Ausnehmung (171) fixierter Einspritzventilkörper (141) des Einspritzventils (14) einen größeren Durchmesser aufweist als die Ventilspitze (143), wobei diese an den Einspritzventilkörper (141) in Richtung zur Abgasleitung (4) hin anschließt.

4. Vorrichtung nach einem der Ansprüche 1 bis 3, **dadurch gekennzeichnet, daß** die Außenwandung (173) des Ventilaufnahmekörpers (17) fest mit einer Wandung (41) der Abgasleitung (4) verbunden ist.

5. Vorrichtung nach einem der Ansprüche 1 bis 4, **dadurch gekennzeichnet, daß** die Längsachse des Einspritzventils (14) in etwa rechtwinklig zur Abgasleitung (4) liegt.

6. Vorrichtung nach einem der Ansprüche 1 bis 4, **dadurch gekennzeichnet, daß** die Längsachse des Einspritzventils (14) einen spitzen Winkel mit der Abgasleitung (4) einschließt.

7. Vorrichtung nach einem der Ansprüche 1 bis 6, **dadurch gekennzeichnet, daß** der Ventilaufnahmekörper (17) aus metallischen Werkstoffen besteht.

8. Vorrichtung nach einem der Ansprüche 1 bis 6, **dadurch gekennzeichnet, daß** der Ventilaufnahmekörper (17) aus keramischen Werkstoffen besteht.

9. Vorrichtung nach einem der Ansprüche 1 bis 6, **dadurch gekennzeichnet, daß** der Ventilaufnahmekörper (17) aus temperaturbeständigem Kunststoffmaterial besteht.

10. Vorrichtung nach einem der Ansprüche 1 bis 9, **dadurch gekennzeichnet, daß** die Drucklufterzeugungseinrichtung eine elektrisch ansteuerbare Pumpe (19) umfaßt.

11. Vorrichtung nach einem der Ansprüche 1 bis 10, **dadurch gekennzeichnet, daß** die Drucklufterzeugungseinrichtung eine mechanisch von der Brennkraftmaschine (BKM) angetriebene Pumpe (19) umfaßt.

12. Vorrichtung nach einem der Ansprüche 1 bis 11, **gekennzeichnet durch** einen an den Ventilaufnahmekörper (17) zur Zuleitung von Druckluft zum Luftspalt (144) im Ventilaufnahmekörper (17) angeschlossenen Druckspeicher (20).

13. Vorrichtung nach einem der Ansprüche 1 bis 12, **dadurch gekennzeichnet, daß** in einer die Drucklufterzeugungseinrichtung (19) mit dem Ventilaufnahmekörper (17) verbindenden Druckluftleitung (18) ein Rückschlagventil (21) eingeschaltet ist.

14. Verfahren zum Nachbehandeln von Abgasen einer mit Luftüberschuß arbeitenden Brennkraftmaschine (BKM) mit einer Abgasnachbehandlungsanlage, bei dem
- NOₓ-Bestandteile im Abgas mittels eines Reduktionskatalysators (6) reduziert werden,
- Reduktionsmittel über eine elektrisch ansteuerbare Dosiereinrichtung in eine Abgasleitung (4) stromaufwärts des Reduktionskatalysators eingebracht wird,
- die Dosiereinrichtung mittels einer Einrichtung gekühlt wird,
- die Dosierung des Reduktionsmittels mit Hilfe eines Einspritzventils (14) mit einem Eispritzventilkörper (144) und einer Austrittsöffnung an der Ventilspitze (143) erfolgt, das von einem mit der Abgasleitung (4) verbundenen Ventilaufnahmekörper (17) umfaßt ist,
- von einer Drucklufterzeugungseinrichtung (19) Druckluft erzeugt und in einen Luftspalt (144) zwischen dem Einspritzventil (14) und dem Ventilaufnahmekörper (17) eingeblasen wird, so daß zumindest die abgasnahen Teile (143) des Einspritzventils (14) mittels der Druckluft gekühlt werden,
**dadurch gekennzeichnet, daß**
die Druckluft einem ersten Teil des Luftspaltes (144), welcher, das Einspritzventil (14) entlang dem Einspritzventilkörper (141) umschließend, jedoch nicht direkt von diesem begrenzt, zwischen einer Innenwandung (172) und einer Außenwandung (173) des Ventilaufnahmekörpers (17) gebildet ist, und weiter einem zweiten Teil des Luftspaltes (144), welcher unmittelbar zwischen der Ventilspitze (143) und der Außenwandung (173) des Ventilaufnahmekörpers (17) gebildet ist, zugeführt wird, und
das Reduktionsmittel kurz vor oder in Höhe der mit einer Durchtrittsöffnung versehenen Wandung (41) der Abgasleitung (4) eingebracht wird.

15. Verfahren nach Anspruch 14, **dadurch gekennzeichnet, daß** die Druckluft von einer elektrisch ansteuerbaren Pumpe (19) bereitgestellt wird und nach Abstellen der Brennkraftmaschine (BKM) die Pumpe (19) vorübergehend noch aktiviert bleibt.

16. Verfahren nach Anspruch 15, **dadurch gekennzeichnet, daß** die Pumpe (19) ativiert bleibt, bis eine vorgegebene Zeitspanne nach Abstellen der Brennkraftmaschine (BKM) abgelaufen ist.

17. Verfahren nach Anspruch 15, **dadurch gekennzeichnet, daß** die Pumpe (19) aktiviert bleibt, bis die Temperatur in der Abgasleitung (4) einen vorgegebenen Wert unterschreitet.

18. Verfahren nach einem der Ansprüche 14 bis 17, **dadurch gekennzeichnet, daß** während des Betriebes der Brennkraftmaschine (BKM) und der Dosiereinrichtung von der Drucklufterzeugungseinrichtung ein Druckspeicher (20) gefüllt wird, der nach Abstellen der Brennkraftmaschine (BKM) und Deaktivieren der Dosiereinrichtung Druckluft zur Kühlung des Einspritzventils (14) liefert.

19. Verfahren nach einem der Ansprüche 14 bis 18, **dadurch gekennzeichnet, daß** die Druckluft zum Kühlen des Einspritzventils (14) aus einem zur Steuerung weiterer Funktionen eines durch die Brennkraftmaschine (BKM) angetriebenen Fahrzeuges vorhandenen Druckluftkreises entnommen wird.

20. Verfahren nach einem der Ansprüche 14 bis 18, **dadurch gekennzeichnet, daß** die Druckluft zum Kühlen des Einspritzventils (14) über einen gedrosselten Abzweig stromabwärts eines Ladeluftkühlers einer aufgeladenen Brennkraftmaschine (BKM) entnommen wird.

## Claims

1. A device for aftertreatment of exhaust gases of an internal-combustion engine (BKM) operating with excess air and having an exhaust-gas aftertreatment system (1), with
- a reduction catalytic converter (6) serving for reduction of NOₓ constituents in the exhaust gas,
- an electrically controllable metering apparatus for controlled introduction of reducing agent into an exhaust pipe (4) upstream of the reduction catalytic converter (6),
- an apparatus for cooling the metering apparatus, said apparatus having an injection valve (14) with an injection-valve body (141) and with a discharge aperture at a valve apex (143), said injection valve being enclosed by a valve-accommodating body (17) connected to the exhaust pipe (4),
- an air compressor (19) which blows compressed air into an air gap (144) between the injection valve (14) and the valve-accommodating body (17) for the purpose of cooling at least the parts (143) of the injection valve (14) that are close to the exhaust gas,
**characterised in that**
- the valve-accommodating body (17) is of double-walled construction, with an outer wall (173) and an inner wall (172), the inner wall (172) forming, on the side of the valve-accommodating body (17) facing away from the exhaust pipe (4), a recess (171), which is adapted to the diameter of the injection valve (14) and which retains the injection valve (14), and also forming, together with the outer wall (173), a first part of the air gap (144) surrounding the injection valve (14) along the injection-valve body (141) but not bounded directly by said injection valve, a second part of the air gap (144) being formed directly between the valve apex (143) and the outer wall (173) of the valve-accommodating body (17), and
- the valve-accommodating body (17) is directly connected to the exhaust pipe (4), the discharge aperture of the injection valve (14) being situated a short distance ahead of or at the level of the wall (41) of the exhaust pipe (4) which is provided with a passage aperture for the reducing agent to be introduced.

2. Device according to Claim 1, **characterised in that** the external contour of the valve-accommodating body (17) tapers in the shape of a funnel in the direction of the exhaust pipe (4), the part of the air gap (144) formed in the region of the recess (171) between the inner wall (172) and the outer wall (173) bordering a part of the air gap (144) formed between the valve apex (143) of the injection valve (14) and the outer wall (173).

3. Device according to Claim 2, **characterised in that** an injection-valve body (141) of the injection valve (14) which is fixed in the recess (171) has a larger diameter than the valve apex (143), said valve apex adjoining the injection-valve body (141) in the direction towards the exhaust pipe (4).

4. Device according to one of Claims 1 to 3, **characterised in that** the outer wall (173) of the valve-accommodating body (17) is firmly connected to a wall (41) of the exhaust pipe (4).

5. Device according to one of Claims 1 to 4, **characterised in that** the longitudinal axis of the injection valve (14) lies approximately at a right angle to the exhaust pipe (4).

6. Device according to one of Claims 1 to 4, **characterised in that** the longitudinal axis of the injection valve (14) includes an acute angle with the exhaust pipe (4).

7. Device according to one of Claims 1 to 6, **characterised in that** the valve-accommodating body (17) consists of metallic materials.

8. Device according to one of Claims 1 to 6, **characterised in that** the valve-accommodating body (17) consists of ceramic materials.

9. Device according to one of Claims 1 to 6, **characterised in that** the valve-accommodating body (17) consists of temperature-stable plastic material.

10. Device according to one of Claims 1 to 9, **characterised in that** the air compressor comprises an electrically controllable pump (19).

11. Device according to one of Claims 1 to 10, **characterised in that** the air compressor comprises a pump (19) which is mechanically driven by the internal-combustion engine (BKM).

12. Device according to one of Claims 1 to 11, **characterised by** a hydraulic accumulator (20) which is linked to the valve-accommodating body (17) for the purpose of supplying compressed air to the air gap (144) in the valve-accommodating body (17).

13. Device according to one of Claims 1 to 12, **characterised in that** a check valve (21) is inserted in a compressed-air line (18) connecting the air compressor (19) to the valve-accommodating body (17).

14. A process for aftertreatment of exhaust gases of an internal-combustion engine (BKM) operating with excess air and having an exhaust-gas aftertreatment system, wherein
- NOₓ constituents in the exhaust gas are reduced by means of a reduction catalytic converter (6),
- reducing agent is introduced into an exhaust pipe (4) upstream of the reduction catalytic converter via an electrically controllable metering apparatus,
- the metering apparatus is cooled by means of an apparatus,
- metering of the reducing agent is effected with the aid of an injection valve (14) having an injection-valve body (144) and a discharge aperture at the valve apex (143), said injection valve being enclosed by a valve-accommodating body (17) connected to the exhaust pipe (4),
- compressed air is generated by an air compressor (19) and is blown into an air gap (144) between the injection valve (14) and the valve-accommodating body (17), so that at least the parts (143) of the injection valve (14) that are close to the exhaust gas are cooled by means of the compressed air,
**characterised in that**
the compressed air is supplied to a first part of the air gap (144) which, surrounding the injection valve (14) along the injection-valve body (141) but not bounded directly by the latter, is formed between an inner wall (172) and an outer wall (173) of the valve-accommodating body (17), and further to a second part of the air gap (144) which is formed directly between the valve apex (143) and the outer wall (173) of the valve-accommodating body (17), and
the reducing agent is introduced a short distance ahead of or at the level of the wall (41) of the exhaust pipe (4) which is provided with a passage aperture.

15. Process according to Claim 14, **characterised in that** the compressed air is made available by an electrically controllable pump (19) and the pump (19) remains activated temporarily after the internal-combustion engine (BKM) has been shut down.

16. Process according to Claim 15, **characterised in that** the pump (19) remains activated until a predetermined time-interval has elapsed after the internal-combustion engine (BKM)·has been shut down.

17. Process according to Claim 15, **characterised in that** the pump (19) remains activated until the temperature in the exhaust pipe (4) falls below a predetermined value.

18. Process according to one of Claims 14 to 17, **characterised in that** during operation of the internal-combustion engine (BKM) and of the metering apparatus a hydraulic accumulator (20) is filled by the air compressor, said hydraulic accumulator providing compressed air for the purpose of cooling the injection valve (14) after the internal-combustion engine (BKM) has been shut down and after the metering apparatus has been deactivated.

19. Process according to one of Claims 14 to 18, **characterised in that** for the purpose of cooling the injection valve (14) the compressed air is withdrawn from a compressed-air circuit which is available for the purpose of controlling other functions of a vehicle which is driven by the internal-combustion engine (BKM).

20. Process according to one of Claims 14 to 18, **characterised in that** for the purpose of cooling the injection valve (14) the compressed air is withdrawn via a throttled branch pipe downstream of a charge-air cooler of a supercharged internal-combustion engine (BKM).

## Revendications

1. Dispositif sur post-traitement de gaz d'échappement d'un moteur (BKM) à combustion interne à mélange pauvre, comprenant un système (1) de post-traitement des gaz d'échappement ayant :
- un pot catalytique (6) de réduction servant à réduire des constituants NOₓ des gaz d'échappement ;
- un dispositif d'addition dosée pouvant être commandé électriquement et destiné à introduire de manière réglée de l'agent réducteur dans un conduit (4) pour les gaz d'échappement en amont du pot catalytique (6) de réduction ;
- un dispositif de refroidissement du dispositif d'addition dosée, celui-ci comportant une soupape (14) d'injection ayant un corps (141) de soupape d'injection et un orifice de sortie sur une pointe (143) de soupape qui est entourée d'un corps (17) de logement de la soupape relié au conduit (4) pour les gaz d'échappement ;
- un dispositif (19) de production d'air comprimé, qui insuffle de l'air comprimé dans un intervalle (144) compris entre la soupape (14) d'injection et le corps (17) de logement de la soupape en vue de refroidir au moins les parties (143) proches du gaz de la soupape (14) d'injection
**caractérisée en ce que**,
- le corps (17) de logement de la soupape est à double paroi en ayant une paroi (173) extérieure et une paroi (172) intérieure, la paroi (172) intérieure formant du côté, éloigné du conduit (4) pour les gaz d'échappement, du corps (17) de logement de la soupape, un évidement (171) adapté au diamètre de la soupape (14) d'injection et maintenant la soupape (14) d'injection, ainsi que, ensemble avec la paroi (173) extérieure, une première partie, entourant la soupape (14) d'injection le long du corps (141) de la soupape d'injection mais non délimitée directement par cette soupape, de l'intervalle (144), une deuxième partie de l'intervalle (144) étant formée directement entre la pointe (143) de soupape et la paroi (173) extérieure du corps (17) de logement de la soupape, et le corps (17) de logement de la soupape est relié directement au conduit (4) pour les gaz d'échappement, l'orifice de sortie de la soupape (14) d'injection étant peu avant ou au niveau de la paroi (41) du conduit (4) pour les gaz d'échappement, qui est munie d'une ouverture de passage pour l'agent réducteur à introduire.

2. Dispositif suivant la revendication 1, **caractérisé en ce que** le contour extérieur du corps (17) de logement de la soupape se rétrécit en forme d'entonnoir en direction du conduit (4) pour les gaz d'échappement, la partie de l'intervalle (144) formée dans la zone de l'évidement (171) entre la paroi (172) extérieure et la paroi (173) extérieure étant voisine d'une partie de l'intervalle (144), qui est formée entre la pointe (143) de la soupape (14) d'injection et la paroi (173) extérieure.

3. Dispositif suivant la revendication 2, **caractérisé en ce qu'**un corps (141) de la soupape (14) d'injection immobilisé dans l'évidement (171) a un diamètre plus grand que la pointe (143) de la soupape, celle-ci se raccordant au corps (141) de la soupape d'injection en allant dans la direction du conduit (4) pour les gaz d'échappement.

4. Dispositif suivant l'une des revendications 1 à 3, **caractérisé en ce que** la paroi (173) extérieure du corps (17) de logement de la soupape est relié rigidement à une paroi (41) du conduit (4) pour les gaz d'échappement.

5. Dispositif suivant l'une des revendications 1 à 4, **caractérisé en ce que** l'axe longitudinal de la soupape (14) d'injection fait à peu près un angle droit avec le conduit (4) pour les gaz d'échappement.

6. Dispositif suivant l'une des revendications 1 à 4, **caractérisé en ce que** l'axe longitudinal de la soupape (14) d'injection fait un angle aigu avec le conduit (4) pour les gaz d'échappement.

7. Dispositif suivant l'une des revendications 1 à 6, **caractérisé en ce que** le corps (17) de logement de la soupape est en matériau métallique.

8. Dispositif sur post-traitement de gaz d'échappement suivant l'une des revendications 1 à 6, **caractérisé en ce que** le corps (17) de logement de la soupape est en matériaux céramiques.

9. Dispositif suivant l'une des revendications 1 à 6, **caractérisé en ce que** le corps (17) de logement de la soupape est en matière plastique résistant à la température.

10. Dispositif suivant l'une des revendications 1 à 9, **caractérisé en ce que** le dispositif de production d'air comprimé comprend une pompe (19) pouvant être commandée par voie électrique.

11. Dispositif suivant l'une des revendications 1 à 10 **caractérisé, en ce que** le dispositif de production d'air comprimé comprend une pompe (19) entraînée mécaniquement par le moteur (BKM) à combustion interne.

12. Dispositif suivant l'une des revendications 1 à 11 **caractérisé, par** une source (20) de pression raccordée au corps (17) de logement de la soupape pour l'envoi d'air comprimé à l'intervalle (144) dans le corps (17) de logement de la soupape.

13. Dispositif suivant l'une des revendications 1 à 12, **caractérisé en ce qu'**un clapet (21) anti-retour est monté dans un conduit (18) pour de l'air comprimé mettant le dispositif (19) de production d'air comprimé en communication avec le corps (17) de logement de la soupape.

14. Procédé de post-traitement de gaz d'échappement d'un moteur (BKM) à combustion interne à mélange pauvre comprenant un système de post-traitement des gaz d'échappement, dans lequel :
- on réduit des constituants NOₓ des gaz d'échappement au moyen d'un pot catalytique (6) de réduction ;
- on introduit de l'agent réducteur en aval du pot catalytique de réduction dans un conduit (4) pour des gaz d'échappement par un dispositif d'addition dosée pouvant être commandé électriquement ;
- on refroidit le dispositif d'addition dosée au moyen d'un dispositif ;
- on effectue l'addition dosée de l'agent réducteur à l'aide d'une soupape (14) d'injection ayant un corps (144) de soupape d'injection et un orifice de sortie à la pointe (143) de la soupape qui est entourée d'un corps (17) de logement de la soupape relié au conduit (4) pour les gaz d'échappement ;
- on produit de l'air comprimé par un dispositif (19) de production d'air comprimé et on l'insuffle dans un intervalle (144) compris entre la soupape (14) d'injection et le corps (17) de logement de la soupape, de sorte qu'au moins les parties (143) proches des gaz d'échappement de la soupape (14) d'injection sont refroidis au moyen de l'air comprimé,
**caractérisé en ce que** on envoie l'air comprimé à une première partie de l'intervalle (144) qui est formée entre une paroi (172) intérieure et une paroi (173) extérieure du corps (17) de logement de la soupape en entourant la soupape (14) d'injection le long du corps (141) de la soupape d'injection, mais en n'étant pas délimitée directement par celui-ci et en outre dans une autre partie de l'intervalle (144), qui est formée directement entre la pointe (143) de la soupape et la paroi (173) extérieure du corps (17) de logement de la soupape et
on introduit l'agent réducteur peu avant ou au niveau de la paroi du conduit (4) pour les gaz d'échappement, qui est munie d'une ouverture de passage.

15. Procédé suivant la revendication 14, **caractérisé en ce que** l'on met à disposition l'air comprimé par une pompe (19) pouvant être commandée par voie électrique et, après l'arrêt du moteur (BKM) à combustion interne, la pompe (19) reste encore transitoirement activée.

16. Procédé suivant la revendication 15, **caractérisé en ce que** la pompe reste activée jusqu'à ce qu'un laps de temps prescrit se soit écoulé après l'arrêt du moteur (BKM) à combustion interne.

17. Procédé suivant la revendication 15, **caractérisé en ce que** la pompe (19) reste activée jusqu'à ce que la température dans le conduit (4) pour les gaz d'échappement devienne inférieure à une valeur prescrite.

18. Procédé suivant l'une des revendications 14 à 17, **caractérisé en ce que**, pendant le fonctionnement du moteur (BKM) à combustion interne et du dispositif d'addition dosée, on emplit par le dispositif de production d'air comprimé une source (20) de pression qui, après l'arrêt du moteur (BKM) à combustion interne et la désactivation du dispositif d'addition dosée, fournit de l'air comprimé destiné à refroidir la soupape (14) d'injection.

19. Procédé suivant l'une des revendications 14 à 18, **caractérisé en ce que** l'on prélève l'air comprimé destiné au refroidissement de la soupape (14) d'injection d'un circuit d'air comprimé présent pour la commande d'autres fonctions d'un véhicule entraîné par le moteur (BKM) à combustion interne.

20. Procédé suivant l'une des revendications 14 à 18, **caractérisé en ce que** l'on prélève l'air comprimé destiné à refroidir la soupape (14) d'injection par une dérivation étranglée en aval d'un dispositif de refroidissement d'air de suralimentation d'un moteur (BKM) à combustion interne suralimenté.
